Europäisches Patentamt

European Patent Office

Office européen des brevets

(11) Publication number: **0 166 774**
**B1**

(12) **EUROPEAN PATENT SPECIFICATION**

(45) Date of publication of patent specification: **23.03.88**

(51) Int. Cl.⁴: **C 04 B 24/22, C 08 G 16/02**

(21) Application number: **85900540.7**

(22) Date of filing: **19.12.84**

(86) International application number:
**PCT/US84/02074**

(87) International publication number:
**WO 85/02838 04.07.85 Gazette 85/15**

(54) **WATER REDUCING AGENT UTILIZED IN MORTAR AND CONCRETE.**

(30) Priority: **27.12.83 JP 244878/83**

(43) Date of publication of application:
**08.01.86 Bulletin 86/02**

(45) Publication of the grant of the patent:
**23.03.88 Bulletin 88/12**

(84) Designated Contracting States:
**AT BE CH DE FR GB LI LU NL SE**

(56) References cited:
**GB-A-1 119 829**
**GB-A-1 241 106**

**Chemical Abstracts, vol. 90. no. 18, April 1979
(Columbus, Ohio, US), page 227, abstract no.
141457z**

**Chemical Abstracts, vol. 97, no. 18, November
1982 (Columbus, Ohio, US), page 317, abstract
no. 149652z**

(73) Proprietor: **SANDOZ LTD.**
**Lichtstrasse 35**
**CH-4002 Basel (CH)**
(84) **BE CH FR GB LI LU NL SE**

(73) Proprietor: **SANDOZ-PATENT-GMBH**
**Humboldtstrasse 3**
**D-7850 Lörrach (DE)**
(84) **DE**

(73) Proprietor: **SANDOZ-ERFINDUNGEN
Verwaltungsgesellschaft m.b.H.**
**Brunner Strasse 59**
**A-1235 Wien (AT)**
(84) **AT**

(72) Inventor: **IMAI, Kiyoto**
**4-16, Sekiohmachi Takaoka-shi
Toyama-ken (JP)**
Inventor: **SUGAWARA, Masanobu**
**Higashi 2-4 Yushudai, Ichihara-shi
Chiba-ken (JP)**
Inventor: **OHTAKI, Yasuhiko**
**Kamiochiai 973 Yono-shi
Saitama-ken (JP)**
Inventor: **UNO, Kazuo**
**Higashi 2-4 Yushudai, Ichihara-shi
Chiba-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**0 166 774**

**Description**

Background of the invention

This invention relates to a non-air entraining water-reducing agent for use with mortar and/or concrete. This water-reducing agent comprises a high molecular weight condensate of formaldehyde with naphthalene sulfonic acid and isocyanuric acid, or the respective neutralized salts thereof.

In the industry, utilization is made of condensates of formaldehyde and naphthalene sulfonic acid, and formaldehyde and melamine sulfonic acid, or their respective salts, as water-reducing agents. The resultant condensation products, particularly those of a high molecular weight, are often referred to as high-range or high performance water-reducing agents.

Generally, high-range water-reducing agents are used with high cement content mixes, and if added at the time the concrete is being mixed, increases the workability of the concrete, increase the efficiency of the cement, and reduce the amount of water required in the concrete, as well as increase the strength of the concrete at all ages measured. Such agents also increase the quality of the concrete by reducing the tendency of the concrete to form cracks or fissures. Therefore, high-range water-reducing agents are extremely beneficial in the dispersion of crushed rock, mortar, and cement in manufactured concrete.

For all practical purposes, water-reducing agents are utilized to stop slump loss associated with transporting of ready mix concrete, to improve the water reducing characteristics, to improve concrete flowability, and to improve ultimate quality. High-range water-reducing agents are used to produce high strength concrete, particularly with concrete used in secondary products such as prestressed members, and as agents to improve concrete flowability for ease of placement.

Japanese Patent publication SHO 54-1331 reports that water reduction in concrete is obtained by the use of tris (hydroxyalkyl) isocyanurate by itself, or in combination with other known commercial high-range water-reducing agents. However, the use of tris(hydroxyalkyl) isocyanurate alone shows little water reduction in concrete, and water reducing characteristics are in fact diminished as the quantity of tris (hydroxyalkyl) isocyanurate increases in commercial compounds.

Summary of the present invention

The present invention, as a result of an earnest study of water-reducing agents utilized with mortar or concrete, is able to offer a water-reducing agent with performance that greatly reduces the amount of slump loss of concrete when a combination of naphthalene sulfonic acid and isocyanuric acid compounds is used as a product of a co-reaction and/or condensation with formaldehyde.

Thus, this invention relates to a water-reducing agent utilized with mortar and concrete, of which the primary components are condensates of formaldehyde, naphthalene sulfonic acid, and at least one type of isocyanuric acid composition selected from a group which includes isocyanuric acid, tris (hydroxyalkyl) isocyanurate, tris (2-carboxyethyl) isocyanurate, and tris (alkyl) isocyanurate. The neutralized salts of the two acids may be used in place of the acids themselves.

Description of preferred embodiments

In manufacturing the water-reducing agent of the invention, for each mol of naphthalene sulfonic acid, 0.01—0.5 mol of sulfuric acid is used as a catalyst, preferably within the range of 0.04—0.4 mol, and 0.01—0.5 mol of isocyanuric acid composition, preferably the range of 0.02—0.3 mol is added. When the quantity of isocyanuric acid composition in the mixture is less than 0.01 mol, the resulting product is not an effective water-reducing agent, and when above 0.5 mol, the water reducing effectiveness is diminished. Also, 0.08—2.0 mol of formaldehyde (ordinarily as a solution of 37 percent formalin in water), preferably within the range of 0.9—1.5 mol, is added to the reaction mixture. Following the introduction of an amount of inert gas in a quantity sufficient to give a pressure greater than $0.2 \text{ kg/cm}^2\text{G}$, preferably $0.5—10 \text{ kg/cm}^2\text{G}$, the temperature of the reaction mixture is held between 100—140°C, preferably 110—130°C, from 1—10 hours, preferably 3—8 hours, until the reaction is completed.

The reaction is completed when the non-reacted naphthalene sulfonic acid and the non-reacted isocyanuric acid composition are analyzed by means of HLC, and 90 percent or more of the naphthalene sulfonic acid and the isocyanuric acid composition have reacted. Following the completion of the reaction, neutralization is accomplished through ordinary means with caustic soda or calcium hydroxide. The reaction fluid is adjusted to a pH of 8—10. Following the removal, if necessary, of the undissolved components, the water-reducing agent is ready for use.

As sources of naphthalene sulfonic acid, utilization may be made of such mono sulfonic acid types as beta-naphthalene sulfonic acid, alpha-naphthalene sulfonic acid, etc., poly sulfonic acids such as di-sulfonic acid, or tri-sulfonic acid, as well as compounds or mixtures of these. Naphthalene-sulfonic acids can also be obtained from naphthalene sulfate salts. However, in these instances, if the acid sulfate reaction liquor is used directly in the joint condensation reaction of this invention, a catalyst of sulfuric acid is obtained without the need for duplication as an added benefit.

The isocyanuric acid compositions may be used independently as reactants or as mixtures. In addition, a by-product of producing an isocyanuric acid compound may be utilized which waste fluids have an isocyanuric acid composition of 10 percent or more.

2

# 0 166 774

Conventional sources of formaldehyde may, of course, be utilized. For example, gaseous formaldehyde may be dissolved directly in water to produce formalin for the condensation reaction described.

The water-reducing agents of this invention may be used in concrete or mortars at the ratio of 0.01—10 percent, with respect to the hydraulic cement. When compared with other commercial water-reducing agents, there is an improvement in the water reducing capability, and there is a reduction in the degree of slump loss with extended mixing time.

In addition to the indicated preferred mode of the invention, the formaldehyde condensate of the naphthalene sulfonic acid and the isocyanuric acid compounds, various organic functions of these adducts, and the number of molecules, can be changed to generate various types of molecular formulae. In addition, the water-reducing agent of this invention, as indicated earlier, can utilize isocyanuric acid waste fluids, a characteristic which makes it possible to produce a product at a cost which normally is less than that of presently marketed commercial water-reducing agents.

Hereafter, we will provide a detailed explanation of this invention by means of various examples. However, the invention is not technologically limited to these examples, since variations within the scope of the invention would be clearly evident.

## Example 1

115 grams of naphthalene is heated to melting, and, while maintaining the temperature between 120—130°C, 115 grams of 98 percent sulfuric acid is added over a 1 hour time period. The temperature is slowly increased to 160°C over a 1 hour period, and the reaction is maintained at between 155—160°C for 4 hours or more. Following this, the reaction is allowed to cool to approximately 100°C. To this sulfonate reaction liquor, 46 grams of tris(2-hydroxyethyl) isocyanurate is added, and the temperature is maintained at 80—90°C., while 73 grams of 37 percent formalin are added over a 2 hour time period. Next, 3—5 atmospheres of nitrogen gas are added to the reaction container, followed by a temperature increase to 115—120°C., after which the temperature of the reaction is maintained for about 7 hours. As the viscosity of the reaction liquor increases, water may be added and blended into the mix. During the reaction, the reduction in the quantity of beta-naphthalene sulfonic acid and (2-hydroxyethyl) isocyanurate is determined by means of HLC. After completion of the reaction, approximately 100 grams of water is added, and while cooling, the pressure within the reaction chamber is reduced. Subsequently, the reaction liquor is neutralized by normal means, and following the separation of the sulfuric acid salt, adjustment is made to obtain a solution of 42 percent by weight solids. After tests in concrete, it was evident that concrete containing the product of this invention has better flow characteristics, strength, and less slump loss during mixing when compared with other commercial high-range water-reducing agents. Test results are shown in Table 1.

## Example 2

In a similar manner as was described in Example 1, naphthalene is sulfonated by means of concentrated sulfuric acid. An approximately 30% by weight solution of tris (2-hydroxyethyl) isocyanurate, remaining after precipitation of the isocyanurate from the mother liquor, is added in an amount of 23 grams of solids for each 115 grams of naphthalene. Subsequently, 73 grams of 37% formalin are added, and the temperature is held at between 80—90°C for 2 hours, followed by an increase to 115—120°C where it is held for approximately 5 hours, in an atmosphere of nitrogen (3—5 atmospheres), until completion of the reaction. The resulting reactant fluid is treated in the same manner as described in example 1. The results of the concrete tests using the above described product demonstrate improved performance even when the additions are made of residues including tris (hydroxyethyl) isocyanate.

## Example 3

Tris (2-carboxyethyl) isocyanurate is added to the completely reacted sulfonate liquor, as was the tris (2-hydroxyethyl) isocyanurate of example 1. Condensation with formalin is accomplished under the same conditions, resulting in a substance having good performance in concrete, as shown in Table 1.

## Example 4

The 46 grams of tris (2-hydroxyethyl) isocyanurate of example 1 is increased to 69 grams, and condensation is achieved in the same manner by the addition of 73 grams of 37% formalin under pressure in the reaction flask. Following the neutralization of the condensate liquor, concrete tests were performed.

## Example 5

The 23 grams of 30% by weight of tris (2-hydroxyethyl) isocyanurate utilized in example 2 is increased to 34 grams, and condensation and neutralization were performed in the same manner. The resultant product was then tested in concrete.

## Comparative Example 1

A commercial high performance water-reducing agent, the sodium salt of a beta-naphthalene sulfonic acid—formaldehyde condensation, was tested in concrete.

3

Comparative Example 2

A commercial high performance water-reducing agent, the sodium salt of formaldehyde condensed melamine sulfonate, was tested in concrete.

Comparative Example 3

Tris (2-hydroxyethyl) isocyanurate produced by standard methods (a white powder having a melting point of 134—6°C) was tested in concrete.

Comparative Example 4

During manufacture of the tris (2-hydroxyethyl) isocyanurate utilized in example 2, the concentrated residue of the fluid containing 30% tris (2-hydroxyethyl) isocyanurate by weight was dried for 5 hours at 107°C, and tested in concrete.

Comparative Examples 5 and 6

The commercial high performance water-reducing agent shown in comparative example 1, and tris (2-hydroxyethyl) isocyanurate were mixed in ratios of 9 to 1 and 7.5 to 2.5, respectively, and then tested in concrete.

Comparative Examples 7 and 8

The commercial high performance water-reducing agent shown in comparative example 1, and the residue obtained in preparing comparative example 3 are mixed in ratios of 9 to 1 and 7.5 to 2.5, respectively, and then tested in concrete.

Results of concrete tests

| | Quantity used | W/C (%) | S/a* (%) | C Kg/m³ | W Kg/m³ | Slump (cm) | Air quantity (%) | Compressive strength (Kg/cm²) | | | |
|---|---|---|---|---|---|---|---|---|---|---|---|
| | | | | | | | | 1st Day | 3rd Day | 7th Day | 28th Day |
| Example 1 | C×0.5% | 34.9 | 42 | 450 | 157 | 11.0 | 1.6 | 179 | 386 | 542 | 690 |
| 2 | " | " | " | " | " | 10.0 | 1.5 | 178 | 407 | 562 | 694 |
| 3 | " | " | " | " | " | 9.5 | 1.8 | 176 | 392 | 553 | 688 |
| 4 | " | " | " | " | " | 10.0 | 1.8 | 176 | 388 | 544 | 692 |
| 5 | " | " | " | " | " | 9.0 | 1.7 | 174 | 396 | 559 | 689 |
| Comparative Example 1 | " | " | " | " | " | 8.5 | 1.6 | 159 | 371 | 522 | 666 |
| 2 | " | " | " | " | " | 7.0 | 1.5 | 163 | 382 | 519 | 661 |
| 3 | " | " | " | " | " | 1.0 | 1.5 | | | | |
| 4 | " | " | " | " | " | 0.5 | 1.7 | | | | |
| 5 | " | " | " | " | " | 5.0 | 1.7 | | | | |
| 6 | " | " | " | " | " | 4.0 | 2.3 | | | | |
| 7 | " | " | " | " | " | 7.5 | 1.9 | | | | |
| 8 | " | " | " | " | " | 7.0 | 2.1 | | | | |

Material used
1. Cement—Ordinary Portland 3 type mix
2. Fine aggregate—Oikawawa Sangawa Sand, Chiba Sangawa Sand (mix ratio 9:1)
3. Coarse Aggregate—Aoume Crushed Rock (maximum size=20 mm)
*S/a=Sand percentage, defined as the percentage by volume of fine aggregate in the total of fine and coarse aggregate.

## 0 166 774

**Claims for the Contracting States: BE, CH, DE, FR, GB, LI, LU, NL, SE**

1. A water-reducing admixture for mortar and concrete, comprising a high molecular weight condensate of formaldehyde with a mixture of
   a) at least one isocyanuric acid compound selected from the group consisting of isocyanuric acid, tris(hydroxyalkyl)isocyanurate, tris(2-carboxyethyl)isocyanurate and tris(alkyl)isocyanurate and
   b) naphthalene sulfonic acid.

2. An admixture according to Claim 1, in which component a) is a neutralized salt of isocyanuric acid or tris(2-carboxyethyl)isocyanurate.

3. An admixture according to Claim 1, in which component b) is a neutralized salt of naphthalene sulfonic acid.

4. An admixture as claimed in Claim 1, in which the naphthalene sulfonic acid is a compound selected from the group consisting of naphthalene sulfonic acid, beta-naphthalene sulfonic acid, di-sulfonic acid, tri-sulfonic acid, naphthalene sulfonate salts, and mixtures thereof.

5. An admixture according to Claim 1, in which the molar ratio of isocyanuric acid compound to naphthalene sulfonic acid is from about 0.01:1 to about 0.5:1.

6. An admixture according to Claim 5, in which the molar ratio of isocyanuric acid compound to naphthalene sulfonic acid is from about 0.02:1 to about 0.3:1.

7. An admixture according to Claim 5 in which the molar ratio of formaldehyde to naphthalene sulfonic acid is from about 0.08:1 to about 2.0:1.

8. An admixture according to Claim 7 in which the molar ratio of formaldehyde to naphthalene sulfonic acid is from about 0.9:1 to about 1.5:1.

9. An admixture according to Claim 1, in which the isocyanuric acid compound is provided as an isocyanuric acid waste fluid.

**Claims for the Contracting State: AT**

1. A process for the production of a water-reducing admixture for mortar and concrete, comprising the step of condensing formaldehyde with a mixture of
   a) at least one isocyanuric acid compound selected from the group consisting of isocyanuric acid, tris(hydroxyalkyl)isocyanurate, tri(2-carboxyethyl)isocyanurate and tris(alkyl)isocyanurate, and
   b) naphthalene sulfonic acid to give a high molecular weight condensate.

2. A process according to Claim 1, in which component a) is a neutralized salt of isocyanuric acid or tris(2-carboxyethyl)-isocyanurate.

3. A process according to Claim 1, in which component b) is a neutralized salt of naphthalene sulfonic acid.

4. A process as claimed in Claim 1, in which the naphthalene sulfonic acid is a compound selected from the group consisting of naphthalene sulfonic acid, beta-naphthalene sulfonic acid, di-sulfonic acid, tri-sulfonic acid, naphthalene sulfonate salts, and mixtures thereof.

5. A process according to Claim 1, in which the molar ratio of isocyanuric acid compound to naphthalene sulfonic acid is from about 0.01:1 to about 0.5:1.

6. A process according to Claim 5 in which the molar ratio of formaldehyde to naphthalene sulfonic acid is from about 0.08:1 to about 2.0:1.

7. A process according to Claim 1, in which the isocyanuric acid compound is provided as an isocyanuric acid waste fluid.

8. A process according to Claim 1 in which naphthalene is sulfonated with sulfuric acid, the isocyanuric acid compound is added to the acid sulfate reaction liquor and the mixture is condensed with formaldehyde.

9. A process for reducing the amount of water required in mixing concrete or mortar comprising adding to the concrete or mortar during mixing from 0.01% to 10%, based on the hydraulic cement, of a water-reducing admixture comprising a high molecular weight condensate of formaldehyde with a mixture of
   a) at least one isocyanuric acid compound selected from the group consisting of isocyanuric acid, tris(hydroxyalkyl)isocyanurate, tris(2-carboxyethyl)isocyanurate and tris(alkyl)isocyanurate, and
   b) naphthalene sulfonic acid.

**Patentansprüche für Vertragsstaaten: BE, CH, DE, FR, GB, LI, SE, LU, NL**

1. Ein die Wassermenge reduzierender Zusatz für Beton und Mörtel, bestehend aus einem hochmolekularen Kondensationsprodukt, erhalten durch Umsetzen von Formaldehyd mit einem Gemisch aus
   a) wenigstens einer Isocyanursäure-Komponente oder Derivaten davon aus der Reihe von Isocyanursäure, Tris(hydroxyalkyl)isocyanursäure, Tris(2-carboxyäthyl)-isocyanursäure oder Tris(alkyl)-isocyanursäure und
   b) einer Naphthalinsulfonsäure.

6

2. Ein Zusatz gemäss Anspruch 1, dadurch gekennzeichnet, dass die Komponente a) ein neutrales Salz von Isocyanursäure oder Tris(2-carboxyäthyl)-isocyanursäure ist.

3. Ein Zusatz gemäss Anspruch 1, dadurch gekennzeichnet, dass die Komponente b) ein neutrales Salz einer Naphthalinsulfonsäure ist.

4. Ein Zusatz gemäss Anspruch 1, dadurch gekennzeichnet, dass die Naphthalinsulfonsäure-Komponente eine solche aus der Reihe von Naphthalinsulfonsäure, β-Naphthalinsulfonsäure, -Disulfonsäure, -Trisulfonsäure, oder eines Salzes einer Naphthalinsulfonsäure und Gemischen davon ist.

5. Ein Zusatz gemäss Anspruch 1, dadurch gekennzeichnet, dass das Molverhältnis der Isocyanursäure-Komponente zur Naphthalinsulfonsäurekomponente von 0,01:1 bis 0,5:1 beträgt.

6. Ein Zusatz gemäss Anspruch 5, dadurch gekennzeichnet, dass das Molverhältnis der Isocyanursäure-Komponente zur Naphthalinsulfonsäurekomponente von 0,02:1 bis 0,3:1 beträgt.

7. Ein Zusatz gemäss Anspruch 5, dadurch gekennzeichnet, dass das Molverhältnis von Formaldehyd zur Naphthlinsulfonsäure-Komponente von 0,08:1 bis 2,0:1 beträgt.

8. Ein Zusatz gemäss Anspruch 7, dadurch gekennzeichnet, dass das Molverhältnis von Formaldehyd zur Naphthalinsulfonsäure-Komponente von 0,9:1 bis 1,5:1 beträgt.

9. Ein Zusatz gemäss Anspruch 1, dadurch gekennzeichnet, dass die Isocyanursäurekomponente in Form einer Abfall-Lösung der Isocyanursäure eingesetzt wird.

## Patentansprüche für den Vertragsstaat: AT

1. Verfahren zur Herstellung eines die Wassermenge reduzierenden Zusatzes für Beton und Mörtel, dadurch gekennzeichnet, dass man Formaldehyd mit einem Gemisch aus

a) wenigstens einer Isocyanursäure oder Derivaten davon aus der Gruppe von Isocyanursäure, Tris-(hydroxyalkyl)-isocyanursäure, Tris(2-carboxyäthyl)-isocyanursäure oder Tris-(alkyl)-isocyanursäure und

b) einer Naphthalinsulfonsäure kondensiert, um ein hochmolekulares Kondensationsprodukt zu erhalten.

2. Verfahren gemäss Anspruch 1, dadurch gekennzeichnet, dass die Komponente a) ein neutrales Salz von Isocyanursäure oder Tris-(2-carboxyäthyl)-isocyanursäure ist.

3. Verfahren gemäss Anspruch 1, dadurch gekennzeichnet, dass die Komponente b) ein neutrales Salz einer Naphthalinsulfonsäure ist.

4. Verfahren gemäss Anspruch 1, dadurch gekennzeichnet, dass die Naphthalinsulfonsäure eine solche aus der Reihe von Naphthalinsulfonsäure, β-Naphthalinsulfonsäure, -Disulfonsäure, -Trisulfonsäure oder eines Salzes einer Naphthalinsulfonsäure und Gemischen davon ist.

5. Verfahren gemäss Anspruch 1, dadurch gekennzeichnet, dass das Molverhältnis der Isocyanursäure-Komponente zur Naphthalinsulfonsäurekomponente von 0,01:1 bis 0,5:1 beträgt.

6. Verfahren gemäss Anspruch 5, dadurch gekennzeichnet, dass das Molverhältnis von Formaldehyd zur Naphthalinsulfonsäure-Komponente von 0,08:1 bis 2,0:1 beträgt.

7. Verfahren gemäss Anspruch 1, dadurch gekennzeichnet, dass die Isocyanursäurekomponente in Form einer Abfall-Lösung der Isocyanursäure eingesetzt wird.

8. Verfahren gemäss Anspruch 1, dadurch gekennzeichnet, dass Naphthalin mit Schwefelsäure sulfiert wird, die Isocyanursäure Komponente zur Schwefelsäure Lösung zugegeben wird und das Gemisch mit Formaldehyd kondensiert wird.

9. Verfahren zum Reduzieren auf eine notwendige Wassermenge für Beton und Mörtel, dadurch gekennzeichnet, dass man dem Beton oder dem Mörtel während des Mischens 0,01 bis 10%, bezogen auf den hydraulischen Zement eines die Wassermenge reduzierenden Zusatzes eines hochmolekularen Kondensates aus Formaldehyd mit einem Gemisch aus

a) wenigstens einer Isocyanursäure oder Derivaten davon aus der Gruppe von Isocyanursäure, Tris-(hydroxyalkyl)-isocyanursäure, Tris(2-carboxyäthyl)-isocyanursäure oder Tris(alkyl)-isocyanursäure und

b) einer Naphthalinsulfonsäure.

zugibt.

## Revendications pour les Etats Contractants: BE, CH, DE, FR, GB, LI, SE, LU, NL

1. Un adjuvant réducteur d'eau pour mortier et béton, comprenant un produit de condensation à poids moléculaire élevé du formaldéhyde avec un mélange

a) d'au moins un composé de l'acide isocyanurique choisi dans le groupe comprenant l'acide isocyanurique, l'acide tris-(hydroxyalkyl)-isocyanurique, l'acide tris(2-carboxyéthyl)-isocyanurique et l'acide tris-(alkyl)-isocyanurique, et

b) d'acide naphtalène-sulfonique.

2. Un adjuvant selon la revendication 1, dans lequel le composant a) est un sel neutre de l'acide isocyanurique ou de l'acide tris-(2-carboxyéthyl)-isocyanurique.

3. Un adjuvant selon la revendication 1, dans lequel le composant b) est un sel neutre de l'acide naphtalène-sulfonique.

7

4. Un adjuvant selon la revendication 1, dans lequel l'acide naphtalène-sulfonique est un composé choisi dans le groupe comprenant l'acide naphtalènesulfonique, l'acide béta-naphtalène-sulfonique, l'acide disulfonique, l'acide tri-sulfonique, les sels de l'acide naphtalène-sulfonique, et leurs mélanges.

5. Un adjuvant selon la revendication 1, dans lequel le rapport molaire du composé de l'acide isocyanurique à l'acide naphtalène-sulfonique est compris entre environ 0,01:1 et environ 0,5:1.

6. Un adjuvant selon la revendication 5, dans lequel le rapport molaire du composé de l'acide isocyanurique à l'acide naphtalène-sulfonique est compris entre environ 0,02:1 et environ 0,3:1.

7. Un adjuvant selon la revendication 5, dans lequel le rapport molaire du formaldéhyde à l'acide naphtalène-sulfonique est compris entre environ 0,08:1 et environ 2,0:1.

8. Un adjuvant selon la revendication 7, dans lequel le rapport molaire du formaldéhyde à l'acide naphtalène-sulfonique est compris entre environ 0,9:1 et environ 1,5:1.

9. Un adjuvant selon la revendication 1, dans lequel le composé de l'acide isocyanurique est fourni sous forme de fluide résiduaire de l'acide isocyanurique.

**Revendications our l'Etat Contractant: AT**

1. Un procédé pour la préparation d'un adjuvant réducteur d'eau pour mortier et béton, comprenant la condensation du formaldéhyde avec un mélange
a) d'au moins un composé de l'acide isocyanurique choisi dans le groupe comprenant l'acide isocyanurique, l'acide tris-(hydroxyalkyl)-isocyanurique, l'acide tri-(2-carboxyéthyl)-isocyanurique et l'acide tris(alkyl)-isocyanurique, et
b) d'acide naphtalène-sulfonique,
pour donner un produit de condensation à poids moléculaire élevé.

2. Un procédé selon la revendication 1, dans lequel le composant a) est un sel neutre de l'acide isocyanurique ou de l'acide tris-(2-carboxyéthyl)-isocyanurique.

3. Un procédé selon la revendication 1, dans lequel le composant b) est un sel neutre de l'acide naphtalène-sulfonique.

4. Un procédé selon la revendication 1, dans lequel l'acide naphtalène-sulfonique est un composé choisi dans le groupe comprenant l'acide naphtalène-sulfonique, l'acide β-naphtalène-sulfonique, un acide di-sulfonique, un acide tri-sulfonique, les sels de l'acide naphtalène-sulfonique, et leurs mélanges.

5. Un procédé selon la revendication 1, dans lequel le rapport molaire du composé de l'acide isocyanurique à l'acide naphtalène-sulfonique est compris entre environ 0,01:1 et environ 0,5:1.

6. Un procédé selon la revendication 5, dans lequel le rapport molaire du formaldéhyde à l'acide naphtalène-sulfonique est compris entre environ 0,08:1 et environ 2,0:1.

7. Un procédé selon la revendication 1, dans lequel le composé de l'acide isocyanurique est fourni sous forme de fluide résiduaire de l'acide isocyanurique.

8. Un procédé selon la revendication 1, dans lequel le naphtalène est sulfoné avec de l'acide sulfurique, le composé de l'acide isocyanurique est ajouté au bain de sulfonation et le mélange est condensé avec du formaldéhyde.

9. Un procédé pour réduire la quantité d'eau nécessaire dans le gâchage du béton ou du mortier, comprenant l'addition au béton ou au mortier durant la préparation de la gâchée de 0,01 à 10%, par rapport au ciment hydraulique, d'un adjuvant réducteur d'eau comprenant un produit de condensation à poids moléculaire élevée du formaldéhyde avec un mélange
a) d'au moins un composé de l'acide isocyanurique choisi dans le groupe comprenant l'acide tris-(hydroxyalkyl)-isocyanurique, l'acide tris-(2-carboxyéthyl)-isocyanurique et l'acide tris-(alkyl)-isocyanurique, et
b) d'acide naphtalène-sulfonique.